# EUROPÄISCHE PATENTSCHRIFT

(11) **EP 0 722 168 B1**
(45) Veröffentlichungstag und Bekanntmachung des Hinweises auf die Patenterteilung: **07.10.1998**
(21) Anmeldenummer: 95100479.5
(22) Anmeldetag: 16.01.1995
(51) Int. Cl.: G11B 17/22

(54) **Vorrichtung zur Speicherung von Datenträgern**
System for storage of record carriers
Système pour le stockage de supports de données

(43) Veröffentlichungstag der Anmeldung: 17.07.1996
(73) Patentinhaber: Schumacher, Alain, L-7340 Heisdorf (LU)
(72) Erfinder: Schumacher, Alain, L-7340 Heisdorf (LU)
(74) Vertreter: Meyers, Ernest

(56) Entgegenhaltungen:
- WO-A-90/07182
- FR-A- 2 672 417
- IBM TECHNICAL DISCLOSURE BULLETIN, Bd. 37, Nr. 5, Mai 1994 NEW YORK US, Seiten 417-418, XP 000453205 'Multi-independent trays carousel'
- IBM TECHNICAL DISCLOSURE BULLETIN, Bd. 37, Nr. 05, Mai 1994 NEW YORK US, Seiten 155-158, XP 000453117 'Disk input/output station for rotating carousel'

## Beschreibung

Die vorliegende Erfindung bezieht sich auf eine Vorrichtung zur Speicherung von Datenträgern mit automatischem Zugriff zu den einzelnen Datenträger , mit wenigstens einer Speichervorrichtung zum Aufbewahren der Datenträger, einer Schreib-Lesestation für die Datenträger und einer Greif-und Übertragungsvorrichtung um jeden Datenträger einzeln zwischen der Speichervorrichtung und der Schreib-Lesestation oder umgekehrt zu übertragen.

Die Erfindung befasst sich insbesondere mit der Aufbewahrung von optischen Speicherplatten , zum Beispiel den sogenannten CD-Platten. Diese Platten sind, nachdem sie vor einigen Jahren im Audio-Bereich eingeführt wurden, mittlerweile wegen ihrer hohen Datenkapazität auch im Bereich der elektronischen Datenverarbeitung zu den beliebtesten Datenträger geworden.

Für die Anwendung bei Einzelplatzanlagen gibt es Lesegeräte, welche im Prinzip ähnlich wie die Diskettenlaufwerke zu bedienen sind. Die gewünschte CD-Platte wird dabei aus einer Ablage herausgesucht und manuell in das Lesegerät geschoben. Am Ende des Ablesevorgangs wird die Platte dem Lesegerät wieder manuell entnommen und nach einem zweckmässigen Ordnungsschema wieder abgelegt.

Bei Arbeiten welche jedoch einen häufigen Zugriff auf verschiedene CD-Platten erfordern, wie zum Beispiel Datenbanken mit mehreren CD-Platten oder verschiedene komplementäre Datenbanken, können die erforderlichen Manipulationen der CD-Platten bereits schnell zu zeitaufwendigen und lästigen Nebenbeschäftigungen werden. Um die Manipulationen bei mehrfachem Zugriff auf verschiedene Platten zu vereinfachen, gibt es deshalb bereits Lesegeräte , welche mit einer zum Beispiel sechs Platten fassenden Kassette bestückt werden können oder die Anlagen werden mit mehreren Lesegeräten ausgerüstet.

Angesichts des Erfolgs der CD-Platte bei Einzelplatzanlagen müsste man eigentlich bei informationstechnisch vernetzt arbeitenden Organisationen, wie Verwaltungen, Universitäten, Bibliotheken , Datenbanken, usw., einen noch grösseren Erfolg feststellen, weil ausser den vielfältigen Anwendungen des sogenannten "electronic publishing" die CD-Platten innerhalb einer grösseren Organisation zur idealen Abspeicherung von organisationsinternen Daten benutzt werden. Desweiteren eröffnen sich durch die Digitalisierung der Telefonanlagen, bzw. der aufkommenden Verknüpfung von Computer-und Telefonanlagen zusätzliche Anwendungen als Sprachtank zur langfristigen Archivierung der Sprache.

Dieser Durchbruch der CD-Platten ist aber bislang bei vernetzten Anlagen zumindest teilweise gescheitert weil die bereits oben erwähnten, bei Einzelanlagen auftretenden Manipulationsprobleme hier noch stärker in Erscheinung treten. Um das Arbeiten mit CD-Platten zu gestatten, besteht zwar bei vernetzten Computer-Anlagen die Möglichkeit, jeden PC mit seinem eigenen Lesegerät auszustatten, was jedoch bei einer wachsenden Anzahl PC's einen grossen Aufwand an finanziellen und organisatorischen Mitteln verlangt. Bei Betrieben, welche mit zentralen Rechensystemen arbeiten und wo die Arbeitsplätze also nur mit Terminals ausgerüstet sind, kommt nur die zentrale Installation von mehreren Lesegeräten in Frage. Das manuelle Bestücken und Entnehmen der CD-Platten ist jedoch in diesem Fall aus organisationstechnischen Gründen schwer durchführbar, besonders im Falle einer geographischen Trennung von Rechner und Arbeitsplatz.

Bei dezentral verwalteten CD-Platten entsteht auch ein Problem bei Bedarf einer Platte, welche sich nicht in dem Verfügungskreis des Arbeitsplatzes befindet. Eine CD-Platte anzuschaffen mit Informationen, welche ein grösserer Kreis Anwender gelegentlich benutzen kann, erscheint sinnlos falls der potentielle Interessent einer Information zuerst im ganzen Betrieb den Verbleib der Platte unter grossem Zeitaufwand erforschen muss. Bei geographischer Trennung zwischen Rechner und Arbeitsplatz besteht dann zusätzlich der Bedarf des Transports durch Kurier oder über Postweg. Bei betriebsinternen Archivplatten ist desweiteren eine dezentrale Ausleihung unter Sicherheitsaspekten nicht zu empfehlen.

Es gibt zwar bereits seit einiger Zeit Geräte auf dem Markt, welche auf dem Prinzip des wahlfreien Zugriffs zu optischen Speicherplatten grössere Mengen Daten archivieren können. Diese Geräte weisen jedoch verschiedene Nachteile auf, welche ihren Einsatz zur Lösung der oben erwähnten Nachteile beschränkt. Bei den einen werden systemspezifische Datenträger (zum Beispiel Platten grösserem Durchmesser) benutzt, welche eine Integration mit Standard CD-Platten des "electronic publishing" unmöglich macht. Bei anderen Geräten gibt es nur eine beschränkte Anzahl Schreib-Lesestationen welche beim Benutzen als reines Archivsystem zwar ausreichend sind, welche aber einen Einsatz als zentrales Informationssystem behindern. Die meisten Geräte verlangen eine verhältnismässig lange Zeitdauer zum Wechseln der Platten und sind nur für eine beschränkte Anzahl abzulegende Platten vorgesehen, so dass die Kapazitätsgrenze des Systems schnell erreicht wird.

IBM Technical Disclosure Bulletin, Bd. 37, Nr. 05, Mai 1994, New York US, Seiten 155-158: "Disk input/output station for rotating carousel" beschreibt ein Plattenmagazin bestehend aus aufeinander gestapelten und einzel drehbar gelagerten Trägerscheiben. Jede Trägerscheibe hat auf einer konzentrischen Kreislinie eine Anzahl Ablagefelder und eine Plattenöffnung.

Die Ablagefelder und Plattenöffnungen weisen jeweils eine vertikal durchgehende Aussparung aus, welche in der Trägerscheibe radial ganz nach aussen reichen. Wenn Ablagefelder und Plattenöffnungen aller Trägerscheiben übereinander positioniert sind, kann damit ein horizontaler Plattengreifarm von außerhalb der Trägerscheiben in den Ablagefelder und Öffnungen greifen und vertikal durch das ganze Magazin fahren.

Die Aufgabe der vorliegenden Erfindung besteht darin, eine Vorrichtung der eingangs erwähnten Gattung zu schaffen, welche bei einem vernetzten Betrieb einen automatischen und wahlfreien Zugriff auf grössere Bestände von Datenträgern bietet und welche als Server eine grosse Anzahl Kunden gleichzeitig und ohne unnötige Wartezeiten zentral und auf zuverlässige Art und Weise bedienen kann.

Erfindungsgemäss wird diese Aufgabe durch die im Anspruch 1 definierten Merkmale gelöst.

Die Datenträger können handelsübliche CD-Platten sein.

Jeder Trägerscheibe ist vorzugsweise eine separate Antriebsvorrichtung zugeordnet, welche aus einem pseudo-linearen Schrittmotor besteht, wobei jede Trägerscheibe einen äusseren Zahnkranz aus magnetischem Weicheisen aufweist, welcher den Rotor des Schrittmotors bildet.

Gemäss einer bevorzugten Ausführungsform weist jede Trägerscheibe sechs kreisförmige Ablagefelder auf, wobei jedes Ablagefeld aus einer tellerförmigen Vertiefung mit offenem Boden besteht.

Die einzelnen Trägerscheiben sind vorzugsweise mittels Distanz-und Sprengringen gruppenweise an der zentralen Säule angeordnet, wobei jede Trägerscheibe sich zwischen einem oberen und einem unteren Kugelkranz befindet.

Jeder Speichervorrichtung ist desweiteren eine Verriegelungsvorrichtung zugeordnet, um die Scheiben in der Wartestellung und in den Zugriffstellungen zu verriegeln.

Die Verriegelungsvorrichtung weist vorzugsweise eine der Anzahl der Trägerscheiben entsprechenden Anzahl Elektromagnete und horizontal schwenkbare Hebel auf, welche jeweils unter der Wirkung einer Feder in Eingriff mit dem äusseren Zahnkranz einer Trägerscheibe schwenkbar sind und bei Erregung der zugeordneten Magnetanker gegen die Wirkung ihrer Feder entriegelt werden können.

Die Elektromagnete und die Schwenkhebel sind vorzugsweise in zwei Reihen in einem Gehäuse angeordnet.

Jede Speichervorrichtung umfasst einen Plattenspeicher, der in einem zylindrischen Gehäuse mit einer Aussenwand angeordnet ist, wobei zwischen der Aussenwand und dem Plattenspeicher eine sich entlang dem Plattenspeicher erstreckende Verriegelungsvorrichtung und zwei Antriebsaggregate mit den jeweiligen Antrieben für geradzahlige und ungeradzahlige Trägerscheiben vorgesehen sind.

Gemäss einer bevorzugten Ausführungsform, umfasst die Greif-und Übertragungsvorrichtung eine drehbare vertikale Schiene mit einem längs der Schiene auf-und abbewegbaren Schlitten und einen sich vom Schlitten vertikal in den Schacht eines Plattenspeichers erstreckenden Greifarm an dessen Ende ein pneumatischer Saugkopf vorgesehen ist.

Gemäss einer ersten Ausführung erstreckt sich die drehbare Schiene axial durch die Tragsäule eines Plattenspeichers.

Gemäss einem weiteren Ausführungsbeispiel mit einer grösseren Kapazität ist eine Mehrzahl Speichervorrichtungen um eine gemeinsame Greif-und Übertragungsvorrichtung angeordnet.

Die Schreib-Lesestation ist vorzugsweise über der oder den Speichervorrichtungen und um die Greif-und Übertragungsvorrichtung angeordnet und besteht zumindest aus einer Anzahl aufeinander gestapelten Schreib - oder Lesegeräten welche einzeln von dem Greifarm bedient werden können.

Die Erfindung hat hiermit eine Plattenbibliothek mit automatischem und wahlfreiem Zugriff zu jeder einzelnen Platte geschaffen, welche es einer grossen Anzahl Kunden erlaubt, innerhalb kürzester Zeit durch telematische Bedienung eine ausgewählte CD-Platte von ihrem Ablagefeld in eines der vielen Geräte der Schreib-Lesestation zu befördern.

Ausführungsbeispiele der Erfindung sind in den Zeichnungen, in denen gleiche Teile mit den gleichen Bezugszahlen bezeichnet sind, dargestellt und werden im folgenden näher beschrieben. Es zeigen :
Figur 1, eine Gesamtansicht eines Plattenspeichers;
Figur 2, eine Trägerscheibe in Draufsicht ;
Figur 3, eine vergrösserte Darstellung eines Teilschnittes durch den Plattenspeicher entlang der Schnittlinie III-III in Figur 2 ;
Figur 4, eine vergrösserte Ansicht eines Antriebs einer Trägerscheibe ;
Figur 5, eine Verriegelungsvorrichtung der Trägerscheibe ;
Figur 6, eine Perspektivdarstellung in Durchsicht einer Speichervorrichtung ;
Figur 7, eine Gesamtansicht eines ersten Ausführungsbeispiels der erfindungsgemässen Vorrichtung ;
Figur 8, eine schematische Ansicht eines einzelnen Lesegerätes ;
Figur 9, eine Gesamtansicht eines zweiten Ausführungsbeispiels der erfindungsgemässen Vorrichtung mit einer grösseren Plattenkapazität.

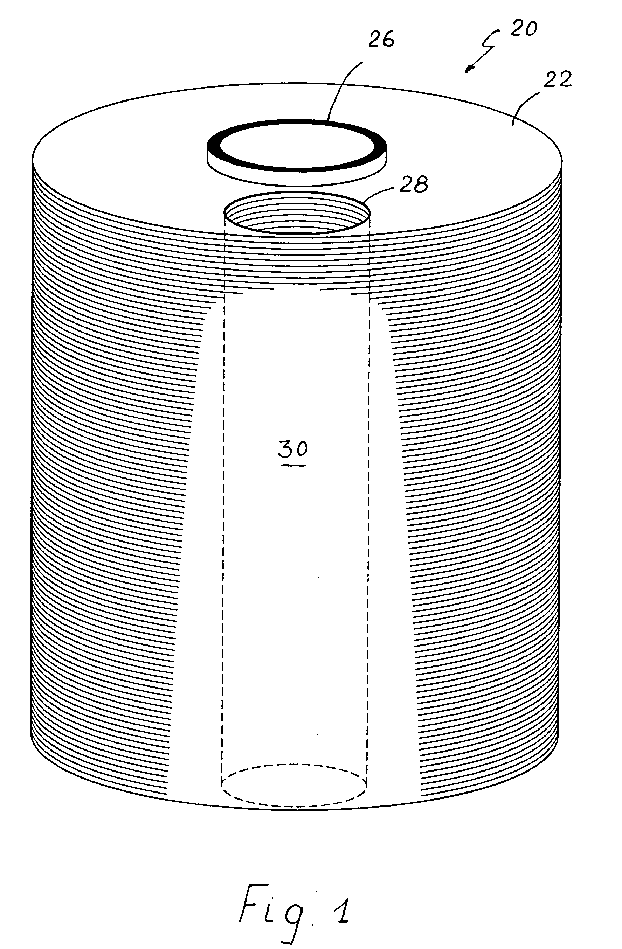

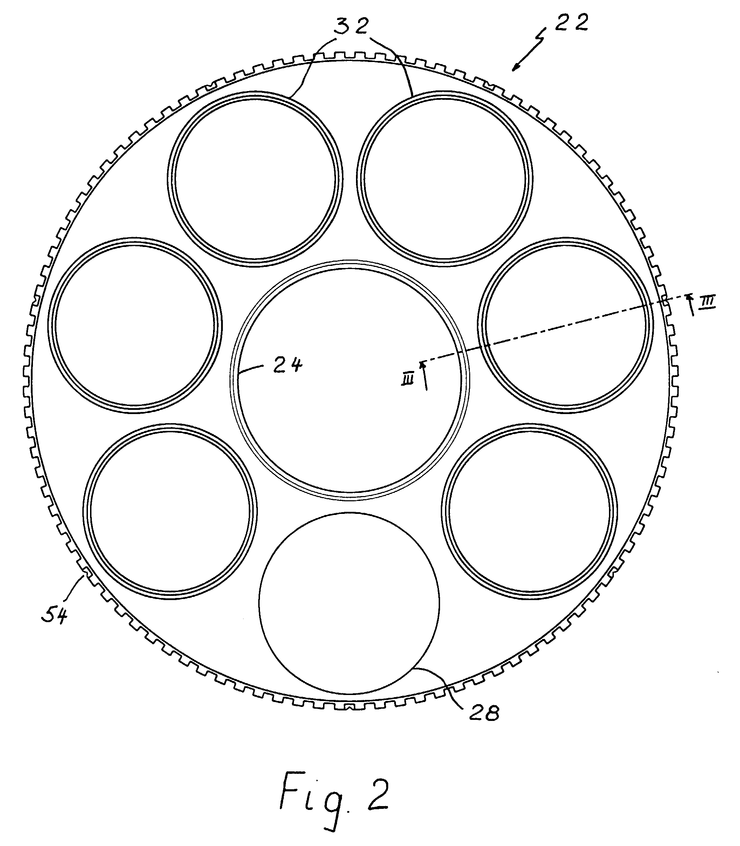

Figur 1, zeigt in Perspektivansicht den Umriss eines erfindungsgemässen Plattenspeichers 20. Dieser besteht aus einer Anzahl, im gezeigten Ausführungsbeispiel aus hundert, aufeinander gestapelten kreisförmigen Trägerscheiben 22 mit einem runden zentralen Ausschnitt 24 (Siehe auch Figur 2). Der Stapel wird von einer zentralen Säule 26, welche sich axial durch die Ausschnitte 24 der einzelnen Scheiben erstreckt getragen.

Jede Trägerscheibe 22 weist eine kreisrunde Öffnung 28 auf mit einem grösseren Durchmesser als derjenige der CD-Platten. Sämtliche Trägerscheiben 22 sind wie nachfolgend näher beschrieben wird, einzeln um die Trägersäule 26 drehbar, wobei jeder Trägerscheibe in Drehrichtung jedoch eine vorbestimmte Ruhestellung zugeordnet ist und zwar derart, dass wenn sämtliche Scheiben 22 sich in Ruhestellung befinden, die einzelnen Öffnungen 28 axial aneinander gereiht sind und einen zylindrischen sich über die Höhe des Stapels erstreckenden Schacht 30 bilden. Wenn eine Scheibe 22 aus der Wartestellung verdreht wird, wird ihr betreffender Oberflächenbereich durch den darüberliegenden offenen Teil des Schachtes 30 mittels einer weiter unten beschriebenen Greifvorrichtung zugänglich.

Wie aus Figur 2 hervorgeht, weist jede Trägerscheibe 22 ausser dem zentralen Ausschnitt 24 und der Öffnung 28 auch eine Anzahl, im gezeigten Beispiel sechs kreisförmige Ablagefelder 32 zur Ablagerung und Speicherung von sechs Platten auf. Die Ablagefelder 32 sind mit der Öffnung 28 kranzförmig um den zentralen Ausschnitt verteilt, so dass beim Verdrehen der Scheiben 22 die einzelnen Ablagefelder 32 nacheinander den Schacht 30 durchstreichen. Bei zweckmässiger Verdrehung der einzelnen Scheiben 22 besteht mithin ein wahlfreier Zugriff zu jeder einzelnen Scheibe 22 und zu jedem einzelnen Ablagefeld 32 bzw. zu jeder darauf abgelegten CD-Platte.

Die Grösse der Trägerscheiben 22 bzw. die Anzahl Ablagefelder 32 auf jeder Trägerscheibe 22 sowie die Anzahl aufeinander gestapelten Trägerscheiben können den einzelnen Betriebsanforderungen angepasst werden. Bei hundert Trägerscheiben 22 mit jeweils sechs Ablagefeldern hat die Speichervorrichtung eine Kapazität von 600 CD-Platten. Dies entspricht einer Datenbank von 780 Gigabytes bei der heutigen Kapazität einer CD-Platte.

Es wäre auch durchaus denkbar, grössere Trägerscheiben vorzusehen mit mehreren konzentrischen Kränzen Ablagefeldern und einer entsprechenden Anzahl Öffnungen zur Bildung mehrerer Zugriffsschächte. Hiermit würde die Speicherkapazität mehr als verdoppelt werden.

Die einzelnen Trägerscheiben können aus Kunststoff oder aus Metall, vorzugsweise aus Aluminium bestehen.

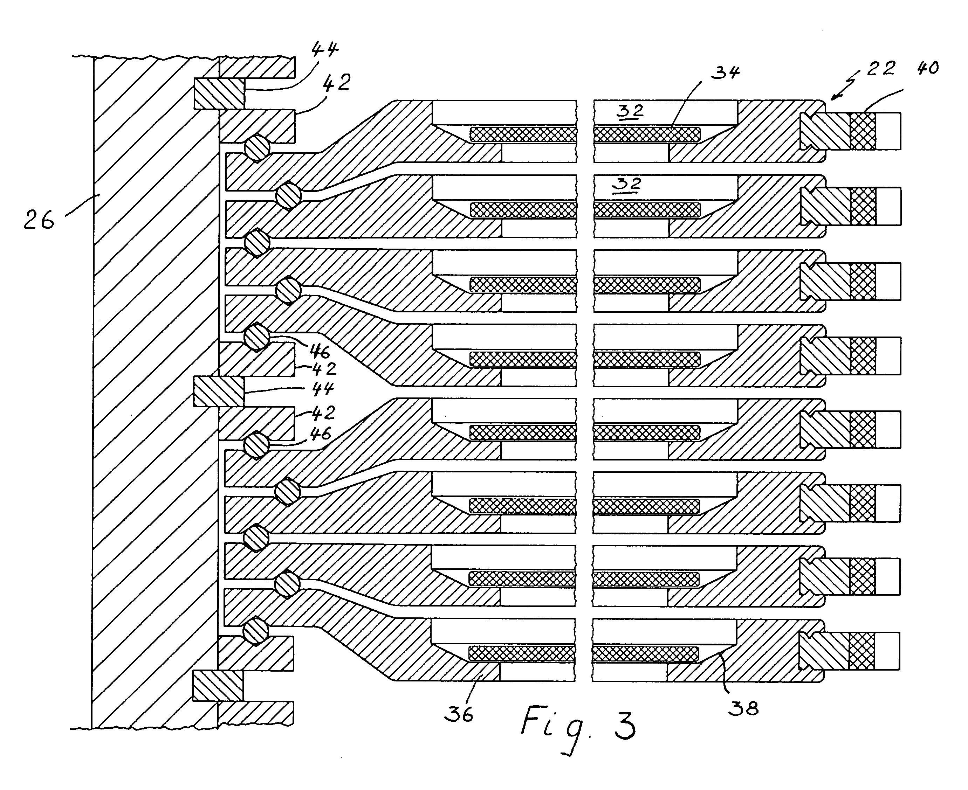

Figur 3 zeigt weitere Einzelheiten der Trägerscheiben 22 und ihrer Anordnung an der Säule 26. Jedes Ablagefeld 32 besteht aus einer tellerförmigen Vertiefung zur Aufnahme der einzelnen CD-Platten 34. Zwecks Gewichtseinsparung ist der Boden jedes Ablagefeldes 32 vorzugsweise offen und weist nur eine flache ringförmige Abstützfläche 36 für die CD-Platten 34 auf. Der Übergang zwischen den flachen Abstützflächen 36 und dem Rand der Ablagefelder ist vorzugsweise als schiefe ringförmige Rampe 38 ausgebildet damit die Platten 34 immer automatisch in dieselbe Lage rutschen und sich bei der Drehung der Scheiben nicht selbsttätig bewegen.

Jede Trägerscheibe weist über den gesamten äusseren Umfang einen Zahnkranz 40 aus magnetischem Weicheisen auf. Dieser Zahnkranz dient wie weiter unter näher erläutert zum Antrieb und zur Verriegelung der Trägerscheiben 22.

Wie aus Figur 3 ersichtlich ist, sind die Trägerscheiben 22 zur Verbesserung der Stabilität vorzugsweise in Gruppen , z. B. von vier Scheiben, um die Säule 26 angeordnet. Jede Gruppe wird zwischen zwei Distanzringen 42 getragen während die Distanzringe 42 jeweils zwischen in entsprechenden Nuten an der Säule einschnappbaren Sprengringen 44 festgeklemmt sind. Zwischen zwei benachbarten Trägerscheiben 22 bzw. zwischen den äusseren Trägerscheiben einer Gruppe und den zugehörigen Distanzringen 42 sind Kugelkränze vorgesehen, wobei die Kugeln 46 in entsprechenden Kugellaufrillen an den Trägerscheiben 22 und den Distanzringen 42 ablaufen. Die beiden Kugelkränze auf der Oberseite und auf der Unterseite einer Trägerscheibe haben vorzugsweise verschiedene Durchmesser wodurch eine bessere Gesamtstabilität gewährleistet ist.

Damit trotz der Distanz-und Sprengringe regelmässige Abstände zwischen den Trägerscheiben 22 bestehen und der Raum vertikal voll ausgenutzt werden kann, sind die Trägerscheiben in jeder Gruppe paarweise nach oben und nach unten gekröpft. Mit dieser Anordnung ist es möglich, die einzelnen Trägerscheiben 22 mit regelmässigen Abständen von nur 1 mm aufeinander zu stapeln. Hiermit ergibt sich bei einer Trägerdicke von 5 mm und einem Stapel von hundert Scheiben eine kompakte Speicherhöhe von nur 60 cm.

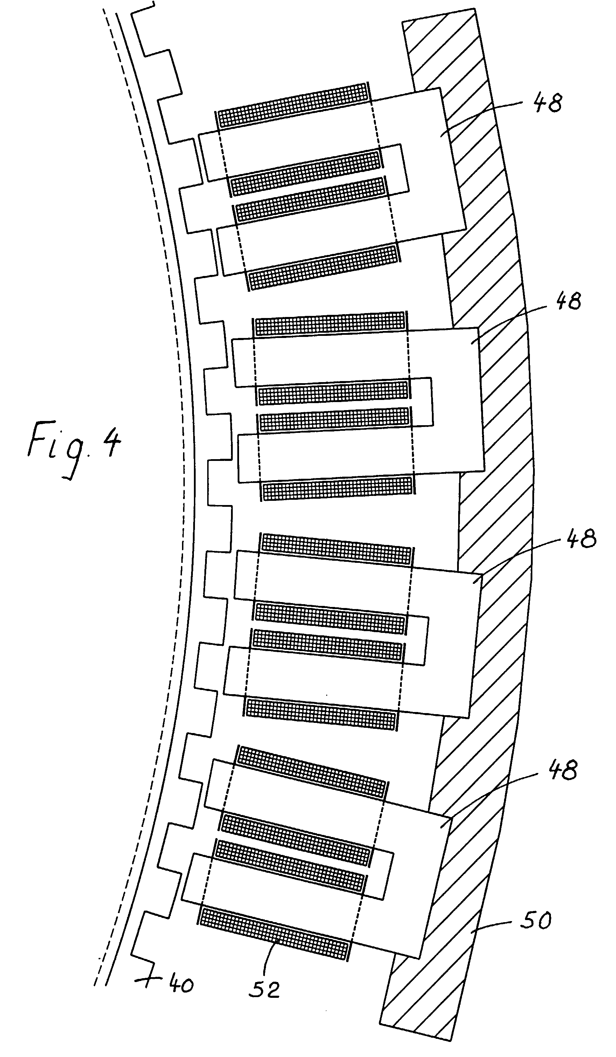

Figur 4 zeigt ein bevorzugtes Ausführungsbeispiel einer Antriebsvorrichtung um die zugehörige Trägerscheibe um die Säule 26 zu drehen. Die Trägerscheibe ist in Figur 4 durch ihren äusseren Zahnkranz 40 angedeutet. Der Antrieb besteht aus einem an sich bekannten pseudo-linearen Schrittmotor. Gegenüber dem Zahnkranz 40 befinden sich vier Magnetanker 48 welche an einer sich entlang dem Scheibenstapel verlaufenden Tragschiene 50 befestigt sind. Den beiden Schenkeln jedes Magnetankers 48 sind zwei benachbarten Zähne des Zahnkranzes 40 einer Trägerscheibe zugeordnet. Jeder Schenkel der vier Magnetanker trägt eine Wickelung 52 welche über einen an sich bekannten, nicht gezeigten Stromkreis mit Gleichspannung betrieben wird. Bei zyklischem sequentiellem Weiterschalten der Erregung der Wickelungen wird jeder Zahn des Zahnkranzes 40 durch das wechselnde Magnetfeld von einem Magnetschenkel zu dem andern und von einem Magnetanker 48 zu dem nächsten angezogen, wodurch der Zahnkranz 40 in Drehung versetzt wird und den Rotor des Schrittmotors bildet. Die Beschleunigung und Abbremsung der Scheiben erfolgt ebenfalls mit dem Schrittmotor.

Jeder Trägerscheibe 22 ist ein Schrittmotor gemäss Figur 4 zugeordnet. Angesichts der Dünne der Trägerscheiben und ihrer schwachen gegenseitigen Abstände sind jedoch vorzugsweise zwei Antriebsaggregate vorgesehen wobei das eine die Schrittmotoren für die geradzahligen Trägerscheiben umfasst und das andere diejenigen für die ungeradzahligen Trägerscheiben.

Zum genauen Positionieren jeder Trägerscheibe in der Wartestellung oder in einer der sechs Zugriffsstellungen ist jedem Ablagefeld 32 und der Öffnung 28 jeder Trägerscheibe eine Verriegelungsstelle zugeordnet. Zu diesem Zweck sind wie Figur 2 zeigt, an den jeweiligen Stellen des Zahnkranzes die Zahnlücken als Einrastnuten 54 ausgebildet.

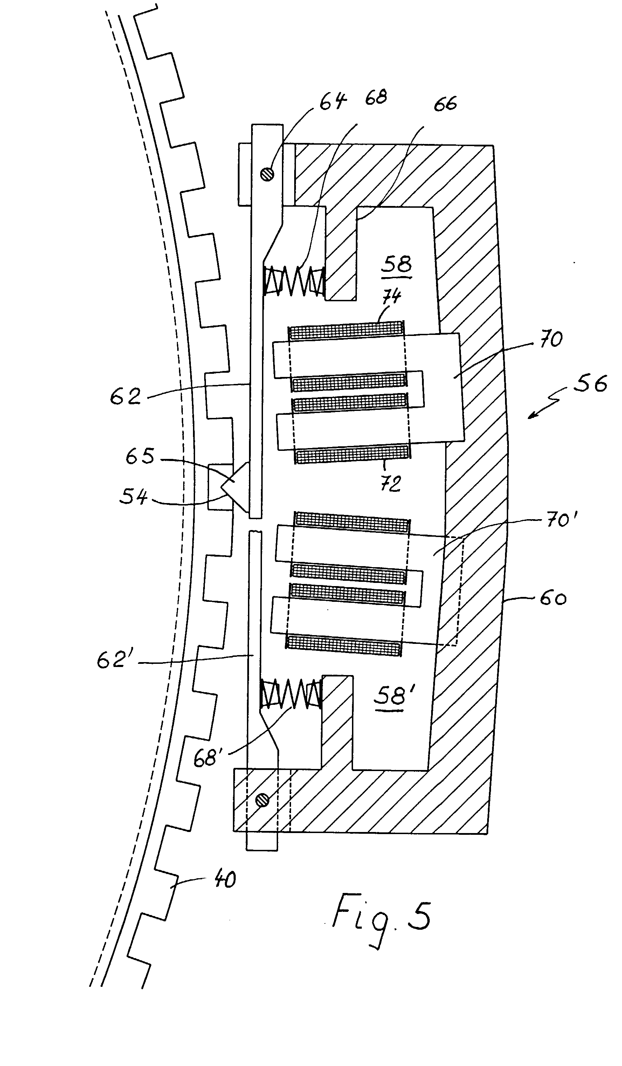

Die Verriegelung erfolgt mit einer sich über die gesamte Höhe des Plattenspeichers erstreckenden Verriegelungsvorrichtung 56 welche im Querschnitt in Figur 5 gezeigt ist und welche für jede Trägerscheibe 22 einen elektromagnetischen Riegel 58 enthält. Die Verriegelungsvorrichtung 56 umfasst ein längliches U-förmiges, zum Plattenspeicher offenes Gehäuse 60. Jeder Riegel 58 besteht aus einem Hebel 62 der mit einem Ende bei 64 in einer seitlichen Wand des Gehäuses 60 schwenkbar gelagert ist und am entgegengesetzten Ende einen den Einrastnuten 54 des Zahnkranzes 40 entsprechenden Einrastkopf 65 aufweist. Der schwenkbare Hebel 62 ist durch eine sich an einer Rippe 66 des Gehäuses 60 abstützende Feder 68 belastet. Jedem Schwenkhebel 62 ist ein Elektromagnet 70 zugeordnet , der an der Wand des Gehäuses 60 befestigt ist und dessen Polschenkel Erregerwickelungen 72, 74 tragen.

Genau wie bei der Antriebsvorrichtung von Figur 4 ist es aus Platzmangel nicht möglich, sämtliche elektromagnetische Riegel untereinander anzuordnen. Die Verriegelungsvorrichtung 56 besitzt deshalb zwei Reihen Riegel 58, 58', wobei die Riegel 58 der einen Reihe für die geradzahligen Trägerscheiben vorgesehen sind und die Riegel 58' für die ungeradzahligen Trägerscheiben.

Die Schwenkhebel 62, 62' werden normalerweise unter der Wirkung ihrer Feder 68, 68' im Eingriff mit dem Zahnkranz 40 gehalten, womit die Trägerscheiben verriegelt sind. Bei Erregung der Elektromagnete 70, 70' werden sie gegen die Federkraft entriegelt und ermöglichen die freie Drehung der Trägerscheiben. Die Ansteuerung der elektromagnetischen Riegel 58, 58' ist mit der Steuerung der Antriebsvorrichtung abgestimmt und zwar so, dass jedesmal wenn ein Antrieb (Figur 4) einer Trägerscheibe betätigt wird, der Elektromagnet 70, 70' derselben Scheibe gleichzeitig erregt wird und dass bei Ausschalten einer Antriebsvorrichtung die Verriegelung automatisch durch Entaktivierung der betreffenden Elektromagneten 70, 70' unter der Wirkung der Feder 68, 68' erfolgt.

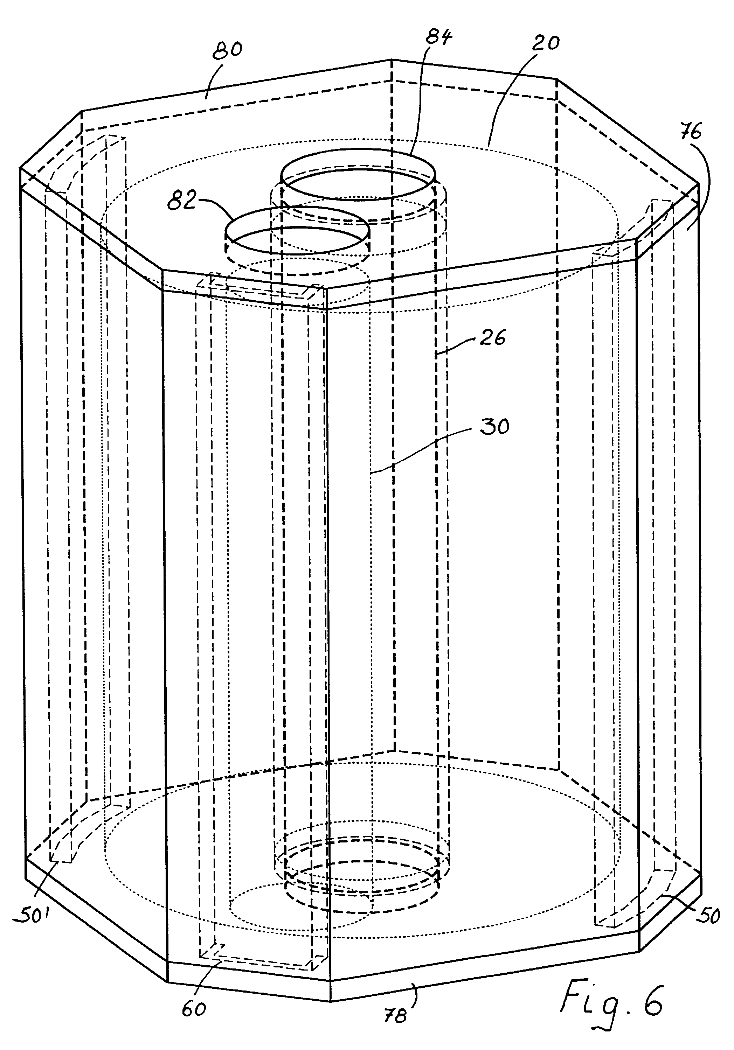

Figur 6 zeigt schematisch eine Speichervorrichtung in transparenter Perspektivansicht. Der punktierte Umriss entspricht dem Plattenspeicher 20 aus Figur 1. Dieser Plattenspeicher 20 ist in einem zylindrischen Gehäuse mit einer Aussenwand 76, einem Boden 78 und einem Deckel 80 untergebracht. Der Deckel 80 ist mit einer zentralen Öffnung 84 zur Halterung der Säule 26 versehen und weist zusätzlich eine weitere Öffnung 82 auf, welche dem Schacht 30 entspricht und den Zugang zu diesem ermöglicht.

Mit 50 und 50' sind die beiden Tragschienen der Antriebsvorrichung angedeutet während bei 60 das Gehäuse der Verriegelungsvorrichtung sichtbar ist. Die Schienen 50, 50' und das Gehäuse 60 können mit dem Boden 78 und dem Deckel 80 verschraubt sein.

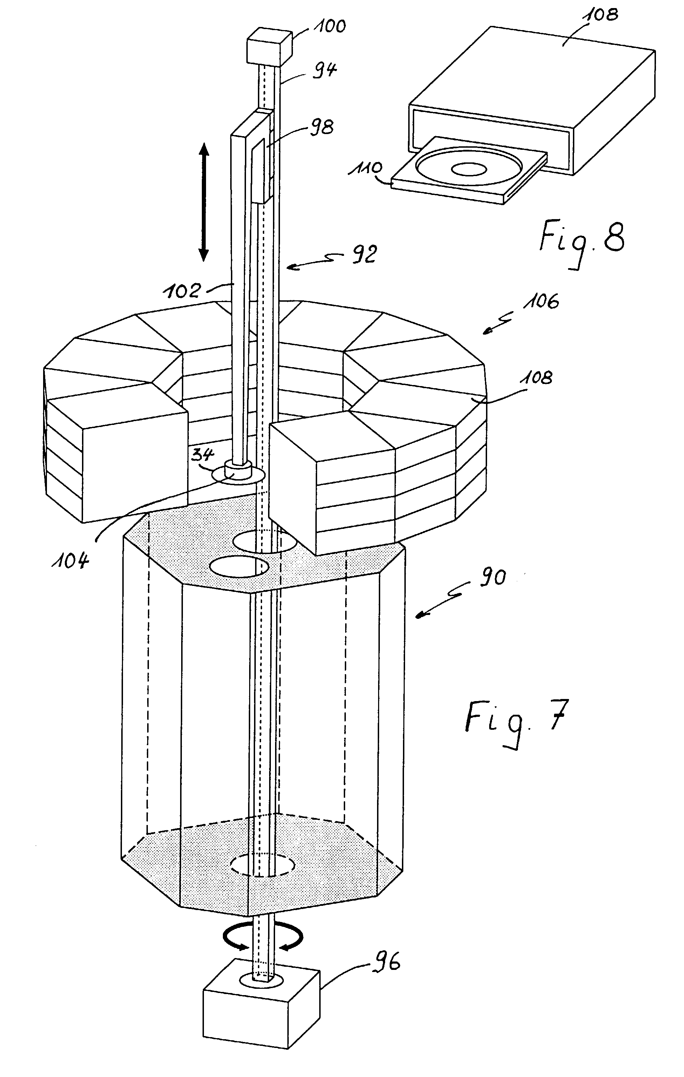

In der Gesamtansicht von Figur 7 der ersten Ausführungsform der erfindungsgemässen Vorrichtung ist die in Figur 6 gezeigte Speichervorrichtung schematisch mit 90 bezeichnet. Mit 92 ist eine Greif-und Übertragungsvorrichtung angedeutet. Diese umfasst eine vertikale Schiene 94 welche sich axial durch die Tragsäule des Plattenspeichers in der Speichervorrichtung 90 erstreckt. Unterhalb der Speichervorrichtung 90 wird die Schiene 94 drehbar von einem Sockel 96 getragen und von einem geeigneten, nicht gezeigten Antrieb, z. B. einem an sich bekannten programmgesteuerten Schrittmotor in Pfeilrichtung angetrieben und ist demgemäss über 360 ° drehbar. Über der Speichervorrichtung ist ein längs der Schiene 94 vertikal bewegbarer Schlitten 98 vorgesehen der mittels eines schematisch mit 100 angedeuteten Antriebs in Pfeilrichtung verschiebbar ist. Der Antrieb kann z. B. in einfacher und an sich bekannter Weise mit einer entlang der Schiene verlaufenden Spindel geschehen. Der Antrieb könnte auch mit einem endlosen Zahnriemen erfolgen.

Ein Greifarm 102 erstreckt sich vom Schlitten 98 parallel zu der Schiene 94 nach unten und ist bei entsprechender Orientierung der Schiene durch den Schacht in der Speichervorrichtung auf-und abwärts bewegbar. Am unteren Ende des Greifarms 102 befindet sich ein pneumatisch bedienter Saugkopf 104 der in der Lage ist, eine CD-Platte mitzuführen wie schematisch mit 34 angedeutet ist.

Über der Speichervorrichtung ist eine Schreib-und Lesestation 106 für CD-Platten vorgesehen. Die Station 106 besteht im gezeigten Beispiel aus einzelnen kranzförmig um die Greif-und Übertragungsvorrichtung 92 aufeinander gestapelten handelsüblichen, gegebenenfalls leicht angepassten Lese-oder Schreibgeräte 108, wobei eines dieser Lesegeräte einzeln in Figur 8 wiedergegeben ist. Im gezeigten Beispiel umfasst die Station 106 sieben Stapeln von je vier Lese-bzw. Schreibgeräten. Unter Schreib-Lesestation 106 ist eine Station zu verstehen, die entweder aus Lesegeräten oder Schreibgeräten oder beiden oder auch aus Geräten welche sowohl lesen wie auch schreiben, bestehen.

Anstatt den Schlitten 98 mit dem Greifarm 102 bewegbar an der Schiene 94 aufzuhängen wäre es ebenfalls möglich, den Greifarm an der Spitze eines teleskopischen drehbaren Mastes vorzusehen, welcher hydraulisch aus-und einfahrbar ist um den Greifarm durch den Schacht auf und ab zu bewegen.

Wenn die in Figur 7 gezeigte Vorrichtung sich in Ruhestellung befindet, ist der Greifarm 102 in der gezeigten Wartestellung über dem Schacht 30 des in Figur 1 gezeigten Plattenspeichers 20. Dabei befinden sich die einzelnen Trägerscheiben 22 ebenfalls in verriegelter Wartestellung so dass der Schacht 30 durchgehend offen ist. Bei telematischer Bedienung der Vorrichtung zum Ablesen einer ausgewählten CD-Platte wird die entsprechende Trägerscheibe 22 gemäss Figur 5 entriegelt und mit dem in Figur 4 gezeigten Antrieb so lange verdreht, bis die ausgewählte CD-Platte auf der Schachtachse liegt. In dieser Winkelstellung wird die Trägerscheibe erneut verriegelt. Gleichzeitig wird der Greifarm 102 vom Antrieb 100 in den Schacht 30 abgelassen bis der Saugkopf 104 sich über der ausgewählten CD-Platte befindet. Anschliessend wird der Saugkopf 104 betätigt und die CD-Platte mit dem Greifarm 104 aus dem Schacht 30 herausgehoben. Sobald der Saugkopf 104 mit der CD-Platte den Schacht 30 verlässt, wird die Schiene 94 verdreht bis der Greifarm 102 sich in der eines freien Lese-oder Schreibgerätes 108 entsprechenden Winkelstellung befindet. Hier wird die CD-Platte vom Saugkopf 104 in die in der Zwischenzeit herausgefahrene Schublade 110 (Figur 8) des Gerätes 108 abgelegt. Sobald der Saugkopf von der CD-Platte befreit ist, wird die Vorrichtung 92 wieder automatisch in die in Figur 7 gezeigte Wartestellung zurückgebracht während nach automatischem Schliessen der Schublade das Gerät 108 startbereit ist. Inzwischen ist die Trägerscheibe im Plattenspeicher ebenfalls wieder in ihre Ruhestellung gedreht worden. Bei beendigtem Lese-bzw. Schreibvorgang wird die CD-Platte wieder automatisch entsprechend einem umgekehrten Ablauf vom Gerät 108 auf ihr Ablagefeld zurückgebracht.

Die einzelnen Antriebe werden über eine zentrale Recheneinheit automatisch gesteuert , so dass die verschiedenen Bewegungsabläufe untereinander koordiniert sind.

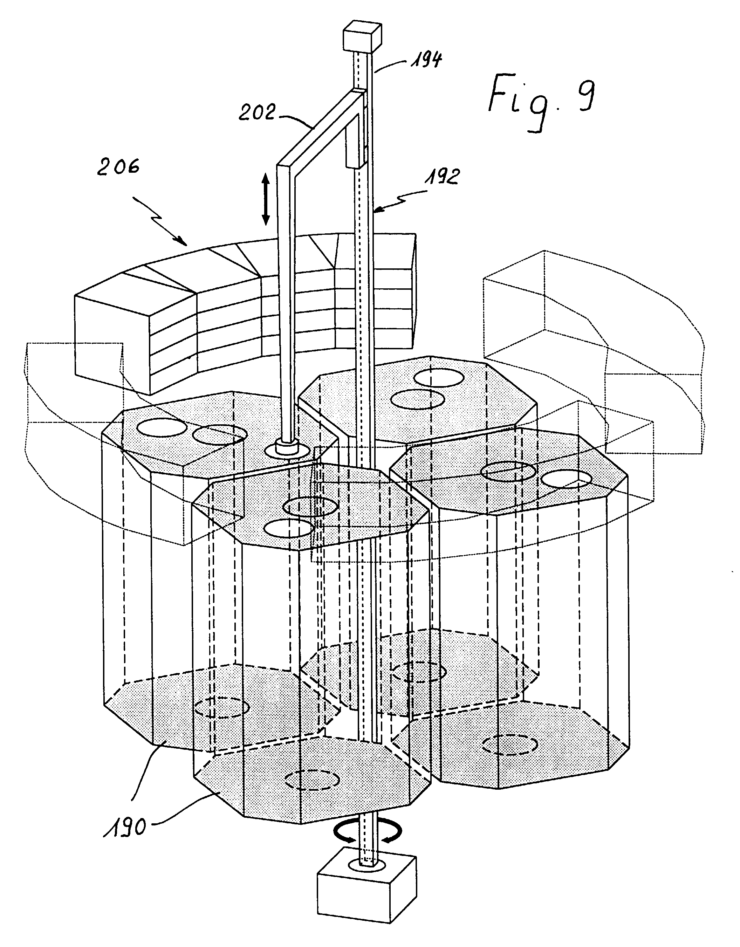

Figur 9 zeigt eine Ansicht ähnlich wie Figur 7 einer erfindungsgemässen Vorrichtung mit einer grösseren Speicherkapazität. Bei dieser Vorrichtung sind vier Speichervorrichtungen 190 gemäss Figur 6 um eine gemeinsame Greif-und Übertragungsvorrichtung 192 angeordnet. Im Vergleich zu Figur 7 weist der Greifarm 202 einen längeren Ausleger auf da die Schächte der einzelnen Speichervorrichtungen 190 weiter von der Schiene 192 entfernt sind. Ansonsten arbeitet die Greif-und Übertragungsvorrichtung 192 auf dieselbe Art und Weise wie die Vorrichtung 92 von Figur 7.

Die Schreib-und Lesestation 206 ist der Kapazität der Speichervorrichtungen 190 angepasst und besteht aus z.B. vier Aggregaten mit jeweils vier Stapeln einzelner Geräte.

## Patentansprüche

1. Vorrichtung zur Speicherung von Datenträgern (34) mit automatischem Zugriff zu den einzelnen Datenträger (34), mit wenigstens einer Speichervorrichtung zum Aufbewahren der Datenträger, einer Schreib-Lesestation (106, 206) für die Datenträger (34) und einer Greif-und Übertragungsvorrichtung (92, 192) um jeden Datenträger einzeln zwischen der Speichervorrichtung und der Schreib-Lesestation (106) oder umgekehrt zu übertragen, wobei jede Speichervorrichtung aus einer Anzahl aufeinandergestapelten und drehbar gelagerten Trägerscheiben (22) besteht, welche von einer zentralen vertikalen Säule (26) getragen werden und mittels einer Antriebsvorrichtung einzeln zwischen einer Wartestellung und Zugriffsstellungen drehbar sind, wobei jede Trägerscheibe (22) eine Anzahl Ablagefelder (32) für die Datenträger (34) und wenigstens eine Öffnung (28) aufweist, welche auf einer konzentrischen Kreislinie um die Säule (26) angeordnet sind, wobei die jeweiligen Öffnungen (28) der einzelnen Trägerscheiben (22) so angeordnet sind, dass sie in der Wartestellung sämtlicher Trägerscheiben (22) einen vertikalen sich über die gesamte Höhe der Speichervorrichtung erstreckenden zylindrischen Schacht (30) bilden, durch welchen die Trägerscheiben (22) mit der Greif-und Übertragungsvorrichtung (92, 192) zugänglich sind, dadurch gekennzeichnet, dass die einzelnen Ablagefelder (32) in der horizontalen Ebene nach aussen geschlossen sind und dass jeder Trägerscheibe (22) eine separate mit dem äusseren Schreibenrand jeder Trägerscheibe (22) zusammenwirkendenden Antriebsvorrichtung zugeordnet ist, mit welcher die einzelnen Trägerscheiben (22), um die zentrale Tragsäule (26) gedreht werden können und dass die Greif-und Übertragungsvorrichtung (92, 192) eine drehbare vertikale Schiene (94, 194), aufweist mit einem längs der Schiene (94, 194) auf-und abbewegbaren Schlitten (98) und einem sich vom Schlitten (98) vertikal in den Schacht (30) eines Plattenspeichers erstreckenden Greifarm (102, 202), mit welchem die Datenträger (34) einzelnen durch den Schacht (30) herausgehoben bzw. in dem Schacht (30) auf ein Ablagefeld (32) abgelegt werden können.

2. Vorrichtung nach Anspruch 1, dadurch gekennzeichnet, dass am Ende des Greifarms (102, 202) ein pneumatischer Saugkopf (104) vorgesehen ist.

3. Vorrichtung nach Anspruch 1, dadurch gekennzeichnet, dass die drehbare Schiene (94) sich axial durch die Tragsäule (26) eines Plattenspeichers (20) erstreckt.

4. Vorrichtung nach Anspruch 1, gekennzeichnet durch eine Mehrzahl um eine gemeinsame Greif-und Übertragungsvorrichtung (192) angeordnete Speichervorrichtungen (190).

5. Vorrichtung nach Anspruch 1, dadurch gekennzeichnet, dass jede Antriebsvorrichtung aus einem pseudo-linearen Schrittmotor besteht und dass jede Trägerscheibe (22) einen äusseren Zahnkranz (40) aus magnetischem Weicheisen aufweist, welcher den Rotor des Schrittmotors bildet.

6. Vorrichtung nach einem der Ansprüche 1 bis 5, dadurch gekennzeichnet, dass jede Trägerscheibe (22) sechs kreisförmige Ablagefelder (32) aufweist.

7. Vorrichtung nach einem der Ansprüche 1 bis 6, dadurch gekennzeichnet, dass jedes Ablagefeld (32) aus einer tellerförmigen Vertiefung mit offenem Boden besteht.

8. Vorrichtung nach einem der Ansprüche 1 bis 7, dadurch gekennzeichnet, dass die einzelnen Trägerscheiben (22) mittels Distanz-und Sprengringen (42, 44) gruppenweise an der zentralen Säule (26) angeordnet sind.

9. Vorrichtung nach Anspruch 8, dadurch gekennzeichnet, dass jede Trägerscheibe (22) zwischen einem oberen und einem unteren Kugelkranz abläuft.

10. Vorrichtung nach Anspruch 9, dadurch gekennzeichnet, dass für jede Trägerscheibe (22) der obere Kugelkranz gegenüber dem unteren Kugelkranz radial versetzt ist.

11. Vorrichtung nach einem der Ansprüche 1 bis 10, gekennzeichnet durch eine Verriegelungsvorrichtung (56) um die Trägerscheiben (22) in der Wartestellung und in den Zugriffsstellungen zu verriegeln.

12. Vorrichtung nach Anspruch 11, dadurch gekennzeichnet, dass die Verriegelungsvorrichtung (56) eine Anzahl der Trägerscheiben (22) entsprechenden Anzahl Elektromagnete (70, 70') und horizontal schwenkbare Hebel (62, 62') aufweist und dass die schwenkbaren Hebel (62, 62') jeweils unter der Wirkung einer Feder (68, 68') in Eingriff mit dem äusseren Zahnkranz (40) einer Trägerscheibe (22) schwenkbar sind und bei Erregung der zugeordneten Magnetanker gegen die Wirkung ihrer Feder entriegelt werden können.

13. Vorrichtung nach Anspruch 12, dadurch gekennzeichnet, dass die Elektromagnete (70, 70') und die Schwenkhebel (62, 62') in zwei Reihen in einem Gehäuse (60) angeordnet sind.

14. Vorrichtung nach einem der Ansprüche 1 bis 13, dadurch gekennzeichnet, dass jede Speichervorrichtung (90, 190) einen Plattenspeicher (20) umfasst, der in einem zylindrischen Gehäuse mit einer Aussenwand (76) angeordnet ist und dass zwischen der Aussenwand (76) und dem Plattenspeicher (20) eine sich entlang dem Plattenspeicher (20) erstreckende Verriegelungsvorrichtung (56) und zwei Antriebsaggregate (50, 50') mit den jeweiligen Antrieben für die geradzahligen und die ungeradzahligen Trägerscheiben vorgesehen sind.

## Claims

1. Apparatus for storing data carriers (34) with automatic access to the individual data carriers (34), having at least one storing apparatus for keeping the data carriers, a reading-writing station (106, 206) for the data carriers (34) and a gripping and transferring apparatus (92, 192) to transfer each data carrier individually between the storing apparatus and the reading-writing station (106) or vice versa, each storing apparatus comprising a number of carrier platters (22) stacked one above the other and rotatably mounted, which are supported by a vertical central column (26) and which are rotatable individually between a waiting position and access positions by means of a driving apparatus, each carrier platter (22) having a number of depository zones (32) for the data carriers (34) and at least one opening (28), which are arranged on a concentric circular line about the column (26), the respective openings (28) of the individual carrier platters (22) being arranged such that they form in the waiting position of all the carrier platters (22) a vertical cylindrical shaft (30) extending over the entire height of the storing apparatus, through which shaft the carrier platters (22) are accessible by the gripping and transferring apparatus (92, 192) characterized in that the individual depository zones (32) are closed in a horizontal plane towards the outside and in that each carrier platter (22) is assigned a separate driving apparatus, which interacts with the outer edge of each carrier platter (22) and with which the individual carrier platters (22) can be rotated about the central carrier column (26), and in that the gripping and transferring apparatus (92, 192) has a rotatable vertical rail (94, 194), with a gripping arm (102, 202), which extends from the carriage (98) vertically into the shaft (30) of a disc store and with which the data carriers (34) can be individually lifted out through the shaft (30) or deposited in the shaft (30) onto a depository zone (32).

2. Apparatus according to claim 1, characterized in that a pneumatic suction head (104) is provided at the end of the gripping arm (102, 202).

3. Apparatus according to claim 1, characterized in that the rotatable rail (94) extends axially through the carrier column (26) of a disc store (20).

4. Apparatus according to claim 1, characterized by a plurality of storing apparatuses (190) around a common gripping and transferring apparatus (192).

5. Apparatus according to claim 1, characterized in that each driving apparatus comprises a pseudo-linear stepping motor and in that each carrier platter (22) has an outer toothed ring (40) of magnetic soft iron, which forms the rotor of the stepping motor.

6. Apparatus according to one of claims 1 to 5, characterized in that each carrier platter (22) has six circular depository zones (32).

7. Apparatus according to one of claims 1 to 6, characterized in that each depository zones (32) comprises a plate-shaped depression with an open bottom.

8. Apparatus according to one of claims 1 to 7, characterized in that the individual carrier platters (22) are arranged in groups on the central column (26) by means of spacer rings and snap rings (42, 44).

9. Apparatus according to claim 8, characterized in that each carrier platter (22) runs between an upper ball ring and a lower ball ring.

10. Apparatus according to claim 9, characterized in that for each carrier platter (22) the upper ball ring is offset radially with respect to the lower ball ring.

11. Apparatus according to one of claims 1 to 10, characterized by a locking apparatus (56) in order to lock the carrier platters (22) in the waiting position and in the access positions.

12. Apparatus according to claim 11, characterized in that the locking apparatus (56) has a number of electromagnets (70, 70') and horizontally pivotable levers (62, 62') corresponding to the number of carrier platters (22) and in that the pivotable levers (62, 62') are respectively pivotable under the action of a spring (68, 68') in engagement with the outer toothed ring (40) of a carrier platter (22) and, upon excitation of the assigned magnet armatures, can be unlocked against the action of their spring.

13. Apparatus according to claim 12, characterized in that the electromagnets (70, 70') and the pivoting levers (62, 62') are arranged in two rows in a housing (60).

14. Apparatus according to one of claims 1 to 13, characterized in that each storing apparatus (90, 190) comprises a disc store (20) which is arranged in a cylindrical housing with an outer wall (76) and in that there are provided between the outer wall (76) and the disc store (20) a locking apparatus (56), extending along the disc store (20), and two drive units (50, 50') with the respective drives for the even-numbered and the odd-numbered carrier platters.

## Revendications

1. Système de stockage de supports de données (34) avec un accès automatique à chacun des supports de données (34) comprenant au moins un dispositif de stockage pour stocker les supports de données, une station d'enregistrement et de lecture (106, 206) des supports de données (34), un dispositif de préhension et de transfert (92, 192) pour transférer chaque support de données séparément entre le dispositif de stockage et la station d'enregistrement et de lecture (106) ou vice versa dans lequel chaque dispositif de stockage comporte une série de disques de support (22) rotatifs empilés les uns sur les autres qui sont portés par une colonne centrale verticale (26) et qui peuvent être tournés séparément à l'aide d'un dispositif d'entraînement approprié, entre une position de garage et une position d'accès, dans lequel chaque disque de support (22) comporte une série d'aires de dépôt (32) pour les supports de données (34) et au moins une ouverture (28) qui sont arrangées selon un cercle concentrique autour de la colonne (26) et où les ouvertures (28) de chacun des disques de support (22) sont disposées de telle manière qu'elles forment, dans la position de garage de tous les disques de support (22), un puits cylindrique (30) s'étendant verticalement sur toute la hauteur du dispositif de stockage et à travers lequel les disques de support (22) sont accessibles par le dispositif de préhension et de transfert (92, 192), caractérisé en ce que les aires de dépôts (32) sont toutes fermées vers l'extérieur dans un plan horizontal, en ce que, à chaque dispositif de support (22) est associé un dispositif d'entraînement séparé coopérant avec le bord extérieur du disque de support (22) et à l'aide duquel chacun des disques de support (22) peut être tourné autour de la colonne de support centrale (26) et en ce que le dispositif de préhension et de transfert (92, 192) comporte un rail rotatif vertical (94, 194) avec un chariot (98) pouvant monter et descendre le long du rail (94, 194), ainsi qu'un bras de préhension (102, 202) s'étendant à partir du chariot (98) verticalement dans le puits (30) d'un dispositif de stockage et à l'aide duquel les supports de données (34) peuvent être retirés séparément à travers le puits (30) ou être déposés dans le puits (30) sur une aire de dépôt (32).

2. Système selon la revendication 1, caractérisé en ce que, à l'extrémité de chaque bras de préhension, (102, 202) est prévue une ventouse pneumatique (104).

3. Système selon la revendication 1, caractérisé en ce que le rail rotatif (94) s'étend axialement à travers la colonne de support (26) d'un magasin à disques (20).

4. Système selon la revendication 1, caractérisé par une pluralité de dispositifs de stockage (190) disposés autour d'un dispositif commun de préhension et de transfert (192).

5. Système selon la revendication 1, caractérisé en ce que chaque dispositif d'entraînement est constitué d'un moteur pas à pas pseudo-linéaire et en ce que chaque disque de support (22) comporte une couronne dentée périphérique (40) en fer doux magnétique formant le rotor du moteur pas à pas.

6. Système selon l'une des revendications 1 à 5, caractérisé en ce que chaque disque de support (22) comporte six aires de dépôt circulaires (32).

7. Système selon l'une des revendications 1 à 6, caractérisé en ce que chaque aire de dépôt (32) est constituée d'une cuvette en forme d'assiette à fond ouvert.

8. Système selon l'une des revendications 1 à 7, caractérisé en ce que les disques de support (22) sont arrangés par groupe à la colonne centrale (26) à l'aide de bagues de retenu et d'écartement (42, 44).

9. Système selon la revendication 8, caractérisé en ce que chaque disque de support (22) évolue entre une couronne de billes de roulement supérieure et inférieure.

10. Système selon la revendication 9, caractérisé en ce que la couronne de bille supérieure de chaque couronne de roulement est décalée radialement par rapport à la couronne de billes inférieure.

11. Système selon l'une des revendications 1 à 10, caractérisé par un dispositif de verrouillage (56) pour verrouiller les disques de support (22) dans la position de garage et dans la position d'accès.

12. Système selon la revendication 11, caractérisé en ce que le dispositif de verrouillage (56) comporte un nombre correspondant au nombre de disques de support (22) d'électro-aimants (70, 70') et de bras (62, 62') pivotant horizontalement et en ce que chaque bras pivotant (62, 62') est engagé sous l'action d'un ressort (68, 68') avec la couronne dentée périphérique (40) d'un disque de support (22) et en est déverrouillable contre l'action du ressort au moyen d'une armature d'un aimant associé.

13. Système selon la revendication 12, caractérisé en ce que les électro-aimants (70, 70') et les bras pivotants (62, 62') sont arrangés en deux rangées dans un boîtier (60).

14. Système selon l'une des revendications 1 à 13, caractérisé en ce que chaque dispositif de stockage (90, 190) comporte un magasin à disques (20) qui se trouve dans un carter cylindrique avec une paroi extérieure (76) et en ce que, entre la paroi extérieure (76) et le magasin à disques (20), se trouve, le long du magasin à disques (20), un dispositif de verrouillage (56) et deux dispositifs d'entraînement (50, 50') avec les entraînements respectifs pour les supports de disques pairs et impairs.
